Europäisches Patentamt

European Patent Office

Office européen des brevets

(19)

(11) Veröffentlichungsnummer: **0 127 879**
**B1**

(12) **EUROPÄISCHE PATENTSCHRIFT**

(45) Veröffentlichungstag der Patentschrift:
**01.04.87**

(21) Anmeldenummer: **84106162.5**

(22) Anmeldetag: **30.05.84**

(51) Int. Cl.⁴: **F 16 C 33/61**

(54) **Drahtwälzlager.**

(30) Priorität: **07.06.83 DE 3320457**

(43) Veröffentlichungstag der Anmeldung:
**12.12.84 Patentblatt 84/50**

(45) Bekanntmachung des Hinweises auf die Patenterteilung:
**01.04.87 Patentblatt 87/14**

(84) Benannte Vertragsstaaten:
**AT BE CH DE FR GB IT LI LU NL SE**

(56) Entgegenhaltungen:
**EP - A - 0 071 026**
**DE - A - 3 108 658**
**FR - A - 1 326 069**

(73) Patentinhaber: **Hoesch Aktiengesellschaft,
Eberhardstrasse 12, D-4600 Dortmund 1 (DE)**

(72) Erfinder: **Wolzenburg, Heinrich, Saarlandstrasse 16,
D-4600 Dortmund 1 (DE)**

(74) Vertreter: **Happe, Otto, Dipl.-Ing., Isselburger
Strasse 12, D-5000 Köln 60 (DE)**

ACTORUM AG

## Beschreibung

Die Erfindung betrifft ein aus Wälzkörpern, aus als Laufbahnen für die Wälzkörper dienende Drahtkörper sowie aus einem inneren und einem äusseren Lagerring, von denen einer zweiteilig ausgebildet ist, bestehendes Drahtwälzlager, bei dem zwischen mindestens einem Drahtkörper und dem zugehörigen Drahtbett in dem betreffenden Lagerring eine Einlage vorgesehen ist.

Bei einem bekannten Drahtwälzlager der vorgenannten Art ist die Einlage ein Dämpfungskörper aus einer mehr oder weniger elastischen Masse (DE-U 8122258). Durch diesen Dämpfungskörper sollen stossartige Belastungen des Drahtwälzlagers reduziert werden, um das Lager zu schonen oder Schwingungen eines Anschlussteiles einer Drehverbindung gegenüber den durch diese verbundenen anderen Anschlussteilen zu reduzieren.

Bei einem anderen bekannten Drahtwälzlager ist eine Einlage vorgesehen (FR-A-1326069), die nicht zwischen einem Drahtkörper und dem zugehörigen Drahtbett angeordnet ist, sondern zwischen Aussenring und Gehäuse. Die Einlage soll und kann ausschliesslich zur Schwingungsdämpfung dienen. Auf die Eigenschaften des Wälzlagers, wie Lagerspiel, Lagervorspannung und Ungenauigkeiten in den Lagerlaufbahnen wirkt sich die Einlage dieses bekannten Wälzlagers nicht aus.

Es ist auch bereits ein Wälzlager bekannt, bei dem eine Einstellung des Lagerspiels möglich ist, und zwar durch Abstimmbeilagen, die zwischen einem geschlitzten Aufnahmering und einem Lagerring (Tragring) angeordnet sind (DE-A-3108658). Dieses Lager erfordert zusätzlich zu den Abstimmbeilagen den genannten Aufnahmering. Darüber hinaus kann durch die unelastischen Abstimmbeilagen keine Dämpfung stossartiger Belastungen des Lagers bewirkt werden.

Der Erfindung liegt die Aufgabe zugrunde, das Drahtwälzlager der eingangs genannten Art derart zu verbessern, dass mittels der Einlage das Spiel, die Dämpfung und/oder der Drehwiderstand des Drahtwälzlagers den Erfordernissen entsprechend variiert werden können.

Die Lösung der gestellten Aufgabe besteht darin, dass die Einlage als schlauchförmiges Druckpolster ausgebildet ist.

Die erfindungsgemässe Ausgestaltung der Einlage ermöglicht es, die Toleranzen der Bauteile des Drahtwälzlagers auszugleichen. Dadurch ist gewährleistet, dass das Spiel, die Dämpfung und/ oder der Drehwiderstand stets den Erfordernissen entsprechen. Das Spiel zwischen Wälzkörper und Laufbahn kann auch negativ sein. In diesem Falle handelt es sich um ein vorgespanntes Drahtwälzlager.

Ein besonderer Vorteil der Erfindung besteht darin, dass Einlauf- und Setzerscheinungen im Drahtwälzlager während der ersten Betriebszeit des Lagers ohne Nachstellarbeiten automatisch ausgeglichen werden können.

In Ausgestaltung der Erfindung ist das Druckpolster mit einer Flüssigkeit gefüllt, über die die Kräfte gleichmässig vom Drahtkörper auf den Lagerring übertragen werden.

In weiterer Ausgestaltung der Erfindung steht das Druckpolster über in dem betreffenden Lagerring vorgesehene Bohrungen und/oder Leitungen mit einem Druckerzeuger, Druckspeicher und/oder Regelsystem in Verbindung. Hierdurch ergibt sich der zusätzliche Vorteil, dass die Eigenschaften des Drahtwälzlagers den Betriebserfordernissen des Anschlussaggregates angepasst und während des Betriebes über das Regelsystem verändert werden können.

Eine bevorzugte Ausführungsform der Erfindung besteht darin, dass das Druckpolster mehrteilig ausgebildet ist. Das Druckpolster kann z.B. abschnittsweise getrennt sein und in zwei Teilen in Richtung der Kraftübertragung des Drahtwälzlagers liegen. Es ist jedoch auch eine segmentförmige Aufteilung des Druckpolsters möglich. Hierdurch wird bei unterschiedlichen Einflüssen auf den Durchmesser durch unterschiedliche Gegendrücke des Druckpolsters ein besonders günstiges Betriebsverhalten des Drahtwälzlagers erreicht.

In der Zeichnung sind zwei Ausführungsbeispiele der Erfindung dargestellt. Anhand dieser Zeichnung, die jeweils einen Querschnitt durch den linken Teil eines Drahtwälzlagers zeigt, ist die Erfindung näher erläutert.

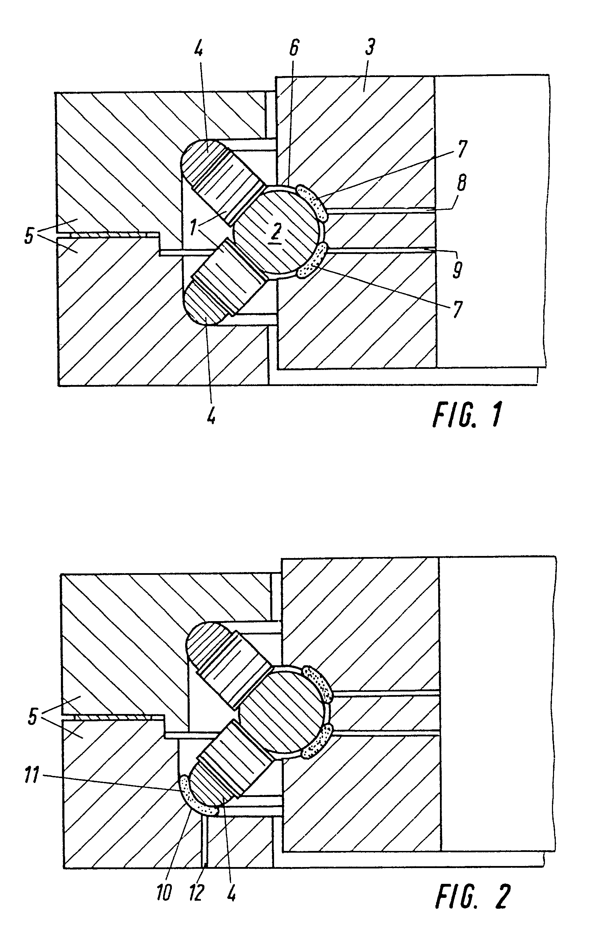

Bei dem in Fig. 1 dargestellten Drahtwälzlager stützen sich die Wälzkörper 1 einerseits über einen Drahtkörper 2 gegen den inneren Lagerring 3 und andererseits über zwei Drahtkörper 4 gegen den zweiteiligen äusseren Lagerring 5 ab, wobei zwischen dem Drahtkörper 2 und dem zugehörigen Drahtbett 6 in dem inneren Lagerring 3 ein zweiteiliges schlauchförmiges Druckpolster 7 vorgesehen ist. Der Innenraum dieses Druckpolsters 7 steht über Bohrungen 8 und 9 in nicht dargestellter Weise mit einem Druckerzeuger, Druckspeicher und/oder Regelsystem in Verbindung.

In Fig. 2 ist ein Drahtwälzlager dargestellt, bei dem zwischen einen der Drahtkörper 4 und dem zugehörigen Drahtbett 10 in dem zweiteiligen äusseren Lagerring 5 ein weiteres schlauchförmiges Druckpolster 11 vorgesehen ist. In diesem Fall kann auch der Innenraum des Druckpolsters 7 über eine Bohrung 12 mit dem nicht dargestellten Druckerzeuger, Druckspeicher und/oder Regelsystem in Verbindung stehen.

## Patentansprüche

1. Aus Wälzkörpern, aus als Laufbahnen für die Wälzkörper dienende Drahtkörper sowie aus einem inneren und einem äusseren Lagerring, von denen einer zweiteilig ausgebildet ist, bestehendes Drahtwälzlager, bei dem zwischen mindestens einem Drahtkörper und dem zugehörigen Drahtbett in dem betreffenden Lagerring eine Einlage vorgesehen ist, dadurch gekennzeichnet, dass die Einlage als schlauchförmiges Druckpolster (7) ausgebildet ist.

2. Drahtwälzlager nach Anspruch 1, dadurch gekennzeichnet, dass das Druckpolster (7) mit einer Flüssigkeit gefüllt ist.

3. Drahtwälzlager nach Anspruch 1, dadurch gekennzeichnet, dass das Druckpolster (7) über in dem betreffenden Lagerring (3) vorgesehene Bohrungen (8, 9) und/oder Leitungen mit einem Druckerzeuger, Druckspeicher und/oder Regelsystem in Verbindung steht.

4. Drahtwälzlager nach Anspruch 1, 2 oder 3, dadurch gekennzeichnet, dass das Druckpolster (7) mehrteilig ausgebildet ist.

## Claims

1. Wire race rolling bearing, consisting of rolling bodies comprising wire bodies, serving as running tracks for the rolling bodies, as well as an inner and an outer bearing ring, one of which is made in two parts, in which an insert is provided between at least one wire body and the associated wire bed in the relevant bearing ring, characterised in that the insert is made as a tubular presssure pad (7).

2. Wire race rolling bearing according to claim 1, characterised in that the pressure pad (7) is filled with a fluid.

3. Wire race rolling bearing according to claim 1, characterised in that the pressure pad (7) is connected by means of bores (8, 9) and/or ducts provided in the associated bearing ring (3) with a pressure source, a pressure store and/or a regulating system.

4. Wire race rolling bearing according to claim 1, 2 or 3, characterised in that the pressure pad (7) is made in several parts.

## Revendications

1. Roulement avec chemins en fil d'acier, constitué de corps de roulement, de fils servant de chemins de roulement pour les corps de roulement, ainsi que d'une bague d'appui intérieure et d'une bague d'appui extérieure dont l'une est réalisée en deux parties, dans lequel, entre au moins un fil et le siège correspondant dans la bague d'appui concernée, on prévoit une garniture intérieure, caractérisé en ce que cette garniture intérieure est réalisée sous forme d'un coussin tubulaire comprimé (7).

2. Roulement selon la revendication 1, caractérisé en ce que le coussin comprimé (7) est rempli d'un liquide.

3. Roulement selon la revendication 1, caractérisé en ce que le coussin comprimé (7) est mis en communication avec un générateur de pression, un accumulateur de pression et/ou un système de régulation à l'intervention de conduites et/ou de passage (8, 9) prévus dans la bague d'appui concernée (3).

4. Roulement selon la revendication 1, 2 ou 3, caractérisé en ce que le coussin comprimé (7) est réalisé en plusieurs parties.

FIG. 1

FIG. 2